# EUROPEAN PATENT SPECIFICATION

(11) **EP 3 821 993 B1**
(45) Date of publication and mention of the grant of the patent: **17.04.2024**
(21) Application number: 20207315.1
(22) Date of filing: 12.11.2020
(51) Int. Cl.: B21B 39/24, B65G 47/244

(54) **ROLLING MILL AREA PRODUCTION EQUIPMENT WITH ROTATING GRABS AND HOT ROLLING PRODUCTION LINE**
PRODUKTIONSAUSRÜSTUNG IM WALZWERKBEREICH MIT ROTIERENDEN GREIFERN UND WARMWALZPRODUKTIONSLINIE
ÉQUIPEMENT DE PRODUCTION DE ZONE DE LAMINOIR COMPORTANT DES PINCES ROTATIVES ET LIGNE DE PRODUCTION DE LAMINAGE À CHAUD

(30) Priority: 12.11.2019 CN 201911099272
(43) Date of publication of application: 19.05.2021
(73) Proprietor: MCC Capital Engineering & Research Incorporation Limited, Beijing (CN); CERI Technology Company Limited, Beijing (CN)
(72) Inventor: REN, Jijun, Beijing (CN); CAO, Jianning, Beijing (CN); HAN, Wen, Beijing (CN); ZHOU, Xikang, Beijing (CN); ZHOU, Yating, Beijing (CN); FU, Bin, Beijing (CN); BAI, Bing, Beijing (CN); LIU, Yanjun, Beijing (CN)
(74) Representative: Slingsby Partners LLP

(56) References cited:
- JP-A- 2007 216 278
- JP-A- 2009 279 630
- KR-B1- 100 946 103

## Description

### TECHNICAL FIELD

The disclosure relates to technical field of a hot-rolling mill, and in particular to a rolling mill area production equipment with rotating grabs, and a hot rolling production line.

### BACKGROUND

In recent years, with the rapid improvement of the production capacity of medium and heavy plates in China, the output of medium and heavy plates has greatly increased, and the market competition has become increasingly fierce. How to expand the rollingable specification range of slabs, improve the productivity and increase the yield of steel plates has become the focus and difficulty in this field.

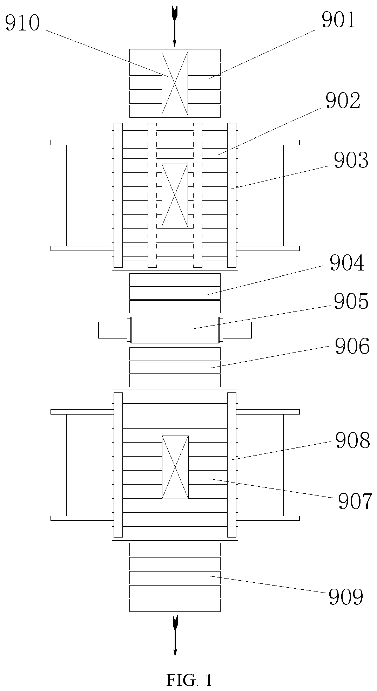

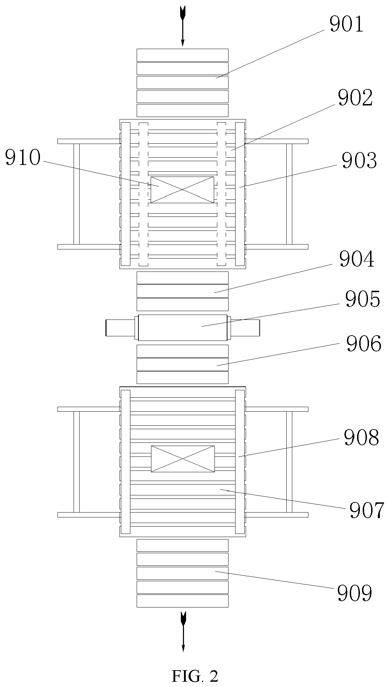

At present, as illustrated in FIGs. 1 and 2, the conventional production line in the rolling mill area sequentially comprises an entry side conveying roller table 901, an entry side rotary roller table 902, an entry side feed roller 904, a mill roller 905, an exit side feed roller 906, an exit side rotary roller table 907 and an exit side conveying roller table 909 from upstream to downstream. Entry side guide are respectively disposed on both sides of the entry side rotary roller table 902, and inlet push plates 903 are disposed on the entry side guide. Exit side guide are respectively disposed on both sides of the exit side rotary roller table 907, and outlet push plates 908 are disposed on the exit side guide. During the rolling of the medium and heavy plates, a rolling piece 910 is adjusted by the entry side rotary roller table 902 to a preset angle, and then subjected to forward rolling by the mill roller 905 after angle adjustment; the rolling piece 910 after the forward rolling is adjusted by the exit side rotary roller table 907 to a preset angle again, and then is subjected to backward rolling by the mill roller 905 after angle adjustment. The rolling piece 910 can be directly output or subjected to the subsequent conventional longitudinal rolling after multiple times of forward and reverse angular rolling productions according to the requirements of the production process.

However, in the existing conventional production line, the preset angle of the rolling piece 910 is adjusted by the cooperation of the side guide disposed on both sides of the production line, the response speed is slow, and the time for adjusting the preset angle of the rolling piece 910 is long, which are not conducive to the improvement of production efficiency. Moreover, the adjustment angle of the rolling piece 910 by the side guide is usually horizontal or longitudinal, and the adjustment angle is greatly restricted.

Regarding the problems of slow speed and low accuracy in the adjustment of the preset angle of the rolling piece by the rolling mill in related art, no effective solution has been proposed yet.

Therefore, based on years of experiences and practices in related industries, the inventors of the present application propose a rolling mill area production equipment with rotating grabs, and a hot rolling production line, so as to overcome the defects of the prior art.

Document JP 2009279630A discloses a method of controlling a slab turning device and a controlling system thereof, which can lift the slab stably during a slab turning process before the slab being loaded into the rolling mill, and can achieve the automation of the turning process.

### SUMMARY

An object of the present disclosure is to provide a rolling mill area production equipment with rotating grabs, and a hot rolling production line. An angle of a rolling piece is adjusted by rotating grab disposed on an entry side rotary roller table and an exit side rotary roller table, so as to improve speed and accuracy and shorten the time in the adjustment of the angle of the rolling piece, achieve a high degree of automation and reduce the difficulty of operation, which contributes to improving the production rhythm and the production efficiency.

The object of the present disclosure can be achieved by adopting the following technical solutions.

There is provided in the present disclosure a rolling mill area production equipment with rotating grabs, comprising a rotating grab device capable of lifting and rotating and a rotary roller table, wherein the rotating grab device is correspondingly disposed over the rotary roller table, the rotating grab device correspondingly clamps the rolling piece passing through the rotary roller table and drives the rolling piece to lift and rotate, so that a center line of the rolling piece and a rolling center line form a preset angle; wherein the rotating grab device comprises a mounting frame, a lifting assembly, a rotating assembly and at least two clamping assemblies, wherein the mounting frame is fixedly erected above the rotary roller table, the lifting assembly is disposed at the top of the mounting frame, the rotating assembly is disposed at the bottom of the lifting assembly, and the at least two clamping assemblies are disposed along a length direction of the rotary roller table; each clamping assembly comprises two clamping bodies in opposite moving directions, each of the clamping bodies is movably disposed at the bottom of a corresponding traverse assembly, and the two traverse assemblies are on the same horizontal straight line, so that the two clamping bodies move in opposite directions on the same horizontal straight line, and each of the transverse assemblies is disposed at the bottom of the rotating assembly. The rotating assembly comprises a connecting plate and a first housing, wherein the first housing is disposed at the bottom of the connecting plate, and an accommodating cavity is formed between the first housing and the connecting plate. A first driving shaft capable of rotating is disposed in a vertical direction within the accommodating cavity, and a top end of the first driving shaft is connected to an output shaft of a first driving motor, and the first driving shaft is fixedly sleeved with a first driving gear. A first driven shaft parallel to the first driving shaft is fixedly disposed within the accommodating cavity. A revolving frame having a cylindrical shape is rotatably sleeved outside the first driven shaft. The revolving frame is fixedly sleeved with a first driven gear, and the first driven gear is meshed with the first driving gear, and the bottom of the revolving frame is connected to the traverse assemblies. A mounting frame is disposed at the bottom of the rotating assembly, and each of the traverse assemblies is fixed on the mounting frame; wherein each traverse assembly comprises a guide moving part, a second driving motor, a second housing, and a bearing seat. The guide moving part, the second housing and the bearing seat are all disposed at the top of the mounting frame. A second driving shaft capable of rotating is disposed in the second housing along a horizontal direction. One end of the second driving shaft is connected to an output shaft of the second driving motor, and the second driving shaft is fixedly sleeved with a second driving gear. A second driven shaft parallel to the second driving shaft is disposed in the second housing. The second driven shaft is fixedly sleeved with a second driven gear, and the second driven gear is meshed with the second driving gear. One end of the second driven shaft is connected to one end of the guiding moving part through a second coupler, and the other end of the guiding moving part is rotatably disposed on the bearing seat through an intermediate bearing. The top of the clamping body is movably disposed on the guide moving part, the second driving motor drives the second driving shaft to rotate, the second driving gear 1136 and the second driven gear 1137 that are meshed drive the guide moving part to rotate, to adjust a position of the clamping body in a horizontal direction, wherein the guide moving part is a screw structure or a ball screw pair sleeved with a nut.

In a preferred embodiment of the present disclosure, the rotary roller table comprises an entry side rotary roller table and an exit side rotary roller table. There are at least two groups of the rotating grab device, and the two groups of the rotating grab devices are correspondingly disposed on the entry side rotary roller table and over the exit side rotary roller table, and a mill roll is disposed between the entry side rotary roller table and the exit side rotary roller table.

In a preferred embodiment of the present disclosure, the mounting frame comprises a connecting bracket and two upright posts, the two upright posts are disposed on both sides of the rotary roller table respectively, a bottom end of each of the two upright posts is fixed on a mounting plane, top ends of the two upright posts are connected to two ends of the connecting bracket, and the lifting assembly is disposed on the connecting bracket.

In a preferred embodiment of the present disclosure, the lifting assembly comprises a lifting cylinder, a fixed end of the lifting cylinder is mounted on the top of the connecting bracket, and a piston rod of the lifting cylinder passes through the connecting bracket in a vertical direction and is connected to the top of the rotating assembly.

In a preferred embodiment of the present disclosure, the lifting assembly further comprises two lifting guide rods and two lifting guide sleeves. The two lifting guide sleeves are respectively disposed on the connecting bracket and are located respectively on both sides of the lifting cylinder. The lifting guide rods are slidably disposed in the corresponding lifting guide sleeves, and the bottom ends of the lifting guide rods pass through the corresponding lifting guide sleeves and are connected to the top of the rotating assembly.

In a preferred embodiment of the present disclosure, a first motor bracket is disposed on the top of the connecting plate, the first driving motor is mounted on the first motor bracket, a first encoder is connected to the first driving motor, and a first coupler is disposed between the output shaft of the first driving motor and the first driving shaft.

In a preferred embodiment of the present disclosure, a second motor bracket is disposed on the outside of the second housing, the second driving motor is mounted on the second motor bracket, a second encoder is connected to the second driving motor, and a third coupler is disposed between the output shaft of the second driving motor and the second driving shaft.

In a preferred embodiment of the present disclosure, a plurality of slide rails are disposed at the bottom of the mounting frame along a length direction of the rotary roller table. Pulleys are mounted respectively on both sides of the top of the clamping body. Top portions of the clamping bodies are cooperatively connected with the corresponding slide rails through the pulleys.

In a preferred embodiment of the present disclosure, the clamping body is a long strip structure disposed in a vertical direction. An anti-slip boss is disposed at the bottom and on an outer wall, facing the side of the rolling piece, of the clamping body.

In a preferred embodiment of the present disclosure, the entry side rotary roller table and the exit side rotary roller table are both composed of a plurality of first roller tables disposed side by side in a horizontal direction, the first roller tables are connected to first roller table motors respectively, and the adjacent first roller table motors are able to drive the corresponding first roller tables to rotate in the same direction or in opposite directions.

In a preferred embodiment of the present disclosure, an inlet stand roll is disposed between the output end of the entry side rotary roller table and the mill roll, and an outlet stand roll is disposed between the mill roll and the input end of the exit side rotary roller table.

In a preferred embodiment of the present disclosure, the inlet stand roll and the outlet stand roll are each composed of a plurality of second roller tables disposed side by side in a horizontal direction, and one side of each of the second roller tables is disposed with a second roller table motor by which the second roller table is driven to rotate.

In a preferred embodiment of the present disclosure, the rolling mill area production equipment with rotating grabs further comprises an entry side conveying roller table and an outlet conveying roller table. The output end of the entry side conveying roller table is connected to the input end of the entry side rotary roller table, and the input end of the exit side conveying roller table is connected to the output end of the exit side rotary roller table.

In a preferred embodiment of the present disclosure, the entry side conveying roller table and the exit side conveying roller table are both composed of a plurality of third roller tables disposed side by side in a horizontal direction, and one side of each of the third roller tables is disposed with a third roller table motor by which the third roller table is driven to rotate.

The present disclosure provides a hot rolling production line, comprising a rolling mill installation area, in which the rolling mill installation area is provided therein with the rolling mill area production equipment with rotating grabs as described above.

In a preferred embodiment of the present disclosure, the rolling mill installation area is a single-stand rolling mill area, and the single-stand rolling mill area is provided therein with the rolling mill area production equipment with rotating grabs.

In a preferred embodiment of the present disclosure, the rolling mill installation area comprises a rough rolling mill area and a finishing rolling mill area, an output end of the rough rolling mill area is connected to an input end of the finishing rolling mill area, and the rolling mill area production equipment with rotating grabs is disposed in the rough rolling mill area and/or the finishing rolling mill area.

In view of above, the characteristics and advantages of the rolling mill area production equipment with rotating grabs and a hot rolling production line according to the present disclosure are as follows: a rotating grab device capable of performing lifting and rotating actions is disposed on the rotary roller table of the hot rolling production line; in the process that the rolling piece passes through the rotary roller table, the rotating grab device can clamp the rolling piece, and drive the rolling piece to lift and rotate, thus the preset angle of the rolling piece during the rolling process can be adjusted quickly and accurately, thereby meeting the requirements for the setting direction of the rolling piece, and shortening the time of adjusting the angle of the rolling piece; In addition, there is no need to manually adjust the lifting height and rotation angle of the rolling piece, thereby enhancing the degree of automation, reducing the operation difficulty, and greatly improving the production rhythm and production efficiency.

### BRIEF DESCRIPTION OF DRAWINGS

The following drawings are only intended to schematically illustrate and explain the present disclosure, rather than limiting the scope of the present disclosure. In which:
FIG. 1 is a schematic view of a structure of a rolling mill production line in the prior art for longitudinally rolling a rolling piece;
FIG. 2 is a schematic view of a structure of a rolling mill production line in the prior art for horizontally rolling a rolling piece;
FIG. 3 is a schematic view of a structure of a rolling mill area production equipment with rotating grabs according to the present disclosure;
FIG. 4 is a front view of a rotating grab device of a rolling mill area production equipment with rotating grabs according to the present disclosure;
FIG. 5 is a front cross-sectional view of a rotating grab device of a rolling mill area production equipment with rotating grabs according to the present disclosure;
FIG. 6 is a front cross-sectional view of a rotating assembly of a rotating grab device of the rolling mill area production equipment with rotating grabs according to the present disclosure;
FIG. 7 is a front cross-sectional view of a traverse assembly of a rotating grab device of a rolling mill area production equipment with rotating grabs according to the present disclosure;
FIG. 8 is a schematic view of a structure of the connection of a guide moving part and a bearing seat in a traverse assembly of a rotating grab device of a rolling mill area production equipment with rotating grabs; and
FIG. 9 is a left side view of a rotating grab device of a rolling mill area production equipment with rotating grabs according to the present disclosure.

### Reference numerals in the prior art:

901: inlet conveying roller table; 902: entry side rotary roller table; 903: inlet push plate; 904: inlet stand roll; 905: mill roll; 906: outlet stand roll; 907: exit side rotary roller table; 908: outlet push plate; 909: outlet conveying roller table; 910: rolling piece.

### Reference numerals in the present disclosure:

1: entry side rotary roller table; 2: mill roll; 3: exit side rotary roller table; 4: inlet conveying roller table; 5: inlet stand roll; 6: outlet stand roll; 7: outlet conveying roller table; 8: inlet side guide; 811: inlet push plate; 9: outlet side guide; 911: outlet push plate; 10: rolling piece; 11: rotating grab device; 111: lifting assembly; 1111: lifting cylinder; 1112: lifting guide rod; 1113: lifting guide sleeve; 112: mounting frame; 1121: connecting bracket; 1122: upright post; 113: traverse assembly; 1131: mounting frame; 11311: slide rail; 1132: guide moving part; 11321: second coupler; 1133: second housing; 11331: second motor bracket; 1134: second driving shaft; 11341: fifth end cover; 11342: sixth end cover; 11343: third thrust bearing; 11344: third self-aligning bearing; 1135: second driven shaft; 11351: seventh end cover; 11352: eighth end cover; 11353: fourth thrust bearing; 11354: fourth self-aligning bearing; 1136: second driving gear; 1137: second driven gear; 1138: second driving motor; 11381: third coupler; 1139: second encoder; 114: rotating assembly; 1140: revolving frame; 1141: connecting plate; 1142: first housing; 1143: first driving shaft; 11431: first end cover; 11432: second end cover; 11433: first thrust bearing; 11434: first self-aligning bearing; 1144: first driven shaft; 11441: third end cover; 11442: fourth end cover; 11443: second thrust bearing; 11444: second self-aligning bearing; 1145: first driving gear; 1146: first driven gear; 1147: first drive motor; 11471: first motor bracket; 1148: first encoder; 1149: first coupler; 115: clamping body; 1151: anti-skip boss; 1152: pulley; 116: bearing seat; 117: intermediate bearing; 12: rotary roller table.

### DESCRIPTION OF EMBODIMENTS

In order to have clearer understanding of the technical features, objects and effects of the present disclosure, the specific embodiments of the present disclosure will now be described with reference to the drawings.

### Embodiment 1

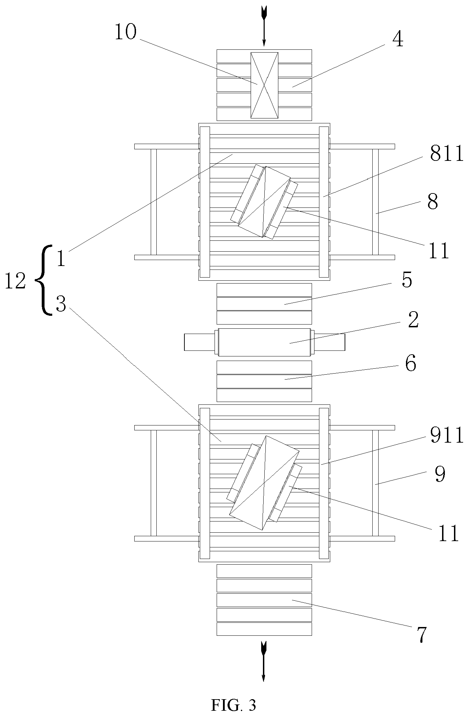

As shown in FIG. 3, there is provided in the present disclosure a rolling mill area production equipment with rotating grabs, comprising a rotating grab device 11 capable of lifting and rotating and a rotary roller table 12, wherein the rotating grab device 11 is correspondingly disposed over the rotary roller table 12, the rotating grab device 11 correspondingly clamps the rolling piece 10 passing through the rotary roller table 12 and drives the rolling piece 10 to lift and rotate, so that a center line of the rolling piece 10 and a rolling center line form a preset angle. In the present disclosure, the rotating grab device 11 is disposed over the rotary roller table 12, the rotating grab device 11 can clamp the rolling piece 10, and drives the rolling piece 10 to lift and rotate, thus the preset angle of the rolling piece 10 during the rolling process can be adjusted quickly and accurately, thereby meeting the requirements for the setting direction of the rolling piece 10, and shortening the adjustment time of adjusting the angle of the rolling piece 10; in addition, there is no need to manually adjust the lifting height and rotation angle of the rolling piece 10, thereby enhancing the degree of automation, reducing the operation difficulty, and greatly improving the production rhythm and production efficiency.

The rolling mill area production equipment with rotating grabs further comprises conventional devices such as a plurality of conveying roller tables, side guides, stand rolls and rolling mills, to cooperate with the rotating grab device 11 and the rotary roller table 12 to complete the rolling of the rolling piece 10.

In an optional embodiment of the present disclosure, as shown in FIG. 3, the rotary roller table 12 comprises an entry side rotary roller table 1 and an exit side rotary roller table 3. There are at least two groups of the rotating grab device 11, and two groups of the rotating grab devices 11 are correspondingly disposed on the entry side rotary roller table 1 and over the exit side rotary roller table 3, and a mill roll 2 is disposed between the entry side rotary roller table 1 and the exit side rotary roller table 3. The rotating grab devices 11 correspondingly clamp the rolling pieces 10 passing through the entry side rotary roller table 1 and the exit side rotary roller table 3, and drive the rolling pieces 10 to perform lifting and rotating movement. The rotating grab device 11 capable of driving the rolling piece 10 to lift and rotate is disposed over each of the entry side rotary roller table 1 and the exit side rotary roller table 3 of the hot rolling production line. In the process that the rolling piece 10 passes through the entry side rotary roller table 1 and the exit side rotary roller table 3, the preset angle of the rolling piece 10 can be pre-calibrated by the rotating grab device 11, which improves the accuracy of the preset angle formed by the center line of the rolling piece 10 and the rolling center line.

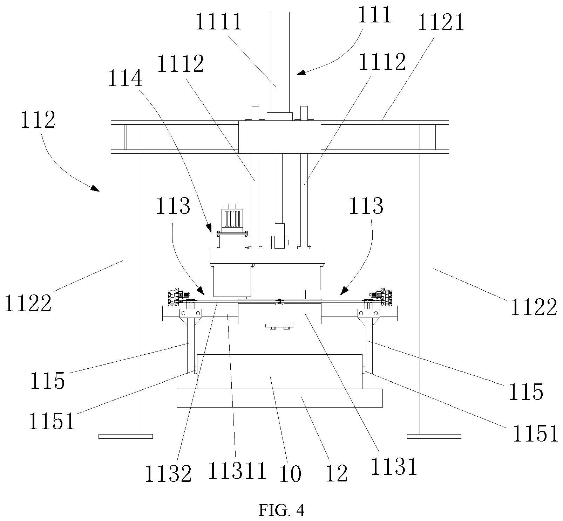

In the present disclosure, as shown in FIG. 4, the rotating grab device 11 comprises a mounting frame 112, a lifting assembly 111, a rotating assembly 114 and at least two clamping assemblies. The mounting frame 112 is fixedly erected above the rotary roller table 12, the lifting assembly 111 is disposed at the top of the mounting frame 112, the rotating assembly 114 is disposed at the bottom of the lifting assembly 111, and each of the clamping assemblies is disposed along the length direction of the rotary roller table 12. The height of the clamping assembly is adjusted by the lifting assembly 111, so that the clamping assembly can be aligned with the rolling piece 10, and a plurality of groups of clamping assemblies cooperate with each other to stably clamp the rolling piece 10, and the angle of the rolling piece 10 is adjusted by the rotating assembly 114. Each clamping assembly comprises two clamping bodies 115 in opposite moving directions, each of the clamping bodies 115 is movably disposed at the bottom of a corresponding traverse assembly 113, and the two traverse assemblies 113 are on the same horizontal straight line, so that the two clamping bodies 115 in each group move in opposite directions on the same horizontal straight line, and each of the transverse assemblies 113 is disposed at the bottom of the rotating assembly 114. In each clamp assembly, two clamping bodies 115 cooperate with each other to abut on two opposite outer walls of the rolling piece 10, thereby clamping the rolling piece 10.

Specifically, as shown in FIGs 4, 5, and 9, the mounting frame 112 comprises a connecting bracket 1121 and two upright posts 1122. The connecting bracket 1121 is a long rod-shaped structure disposed in a horizontal direction. The two upright posts 1122 are both vertical to the connecting bracket 1121. The two upright posts 1122 are respectively disposed on both sides of the rotary roller table 12. The bottom ends of the two upright posts 1122 are fixed on the mounting plane. The top end of one upright post 1122 is connected to one end of the connecting bracket 1121, and the other end of the other upright post 1122 is connected to the other end of the connecting bracket 1121. The lifting assembly 111 is disposed on the connecting bracket 1121. The clamping assembly is disposed above the rolling piece 10 by the mounting frame 112, so as to meet the clamping requirements for the rolling piece 10.

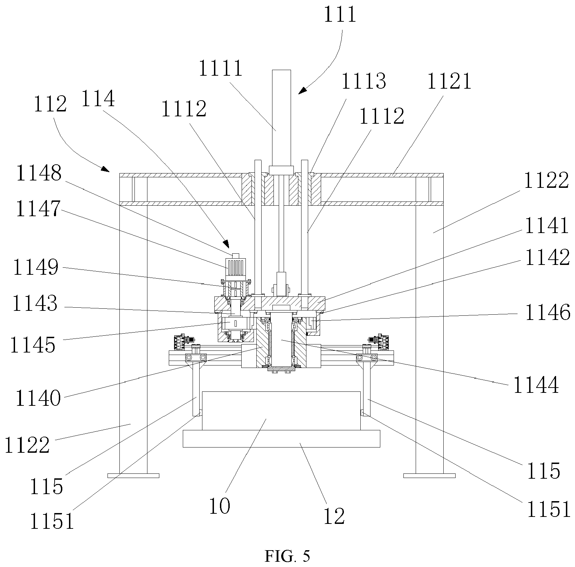

Specifically, as shown in FIGs. 4 and 5, the lifting assembly 111 comprises a lifting cylinder 1111, two lifting guide rods 1112 and two lifting guide sleeves 1113. The fixed end of the lifting cylinder 1111 is installed at the top middle position of the connecting bracket 1121. The piston rod of the lifting cylinder 1111 extends downward in the vertical direction, passes through the connecting bracket 1121 and then connects to the top of the rotating assembly 114. Two lifting guide sleeves 1113 are respectively fixedly disposed on the connecting bracket 1121 and are respectively located on both sides of the lifting cylinder 1111. The two lifting guide rods 1112 are disposed in the corresponding lifting guide sleeves 1113 to be slidable up and down, and the bottom ends of the two lifting guide rods 1112 both pass through the corresponding lifting guide sleeves 1113 and are connected to the top of the rotating assembly 114. The lifting cylinder 1111 plays the role of adjusting the lifting of the clamping assembly. The two lifting guide rods 1112 plays the role of positioning the lifting cylinder 1111, avoiding the rotation of the piston rod of the lifting cylinder 1111 during the lifting process, and improving stability of the lifting cylinder 1111 going up and down.

Further, the lifting cylinder 1111 may be but not limited to a hydraulic cylinder.

Specifically, as shown in FIGs. 4 to 6, the rotating assembly 114 comprises a connecting plate 1141 and a first housing 1142. The connecting plate 1141 is disposed in a horizontal direction, and the piston rod of the lifting cylinder 1111 and the two lifting guide rods 1112 are all fixedly connected to the connecting plate 1141. The first housing 1142 is disposed at the bottom of the connecting plate 1141, and an accommodating cavity is formed between the first housing 1142 and the connecting plate 1141. A first driving motor 1147 is disposed at the top of the connecting plate 1141. A first driving shaft 1143 capable of rotating is disposed in the accommodating cavity along the vertical direction. The top end of the first driving shaft 1143 is connected to the output shaft of the first driving motor 1147. A middle portion of the first driving shaft 1143 is fixedly sleeved with a first driving gear 1145. A first driven shaft 1144 parallel to the first driving shaft 1143 is fixedly disposed in the accommodating cavity. A revolving frame 1140 having a cylindrical shape is rotatably sleeved outside the first driven shaft 1144. A middle portion of the revolving frame 1140 is fixedly sleeved with a first driven gear 1146, and the first driven gear 1146 is meshed with the first driving gear 1145. The bottom of the revolving frame 1140 extends to the outside of the accommodating cavity and is connected to each traverse assembly 113. The first driving motor 1147 drives the first driving shaft 1143 to rotate. The first driving gear 1145 and the first driven gear 1146 are meshed with each other to drive the revolving frame 1140 to rotate, then by which the traverse assemblies 113 are driven to rotate, so as to be able to adjust the direction of the clamping assembly disposed at the bottom of the traverse assembly 113, so as to adjust the angle of the rolling piece 10 on the rotary roller table 12.

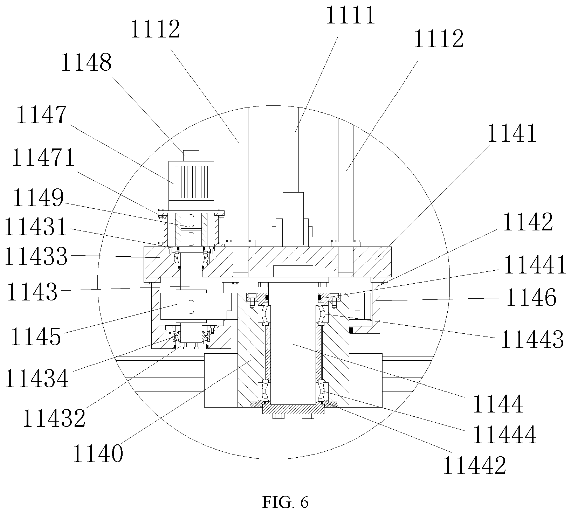

Further, as shown in FIG. 6, a first motor bracket 11471 is fixedly disposed at the top of the connecting plate 1141. The first driving motor 1147 is mounted on the first motor bracket 11471. The first driving motor 1147 is connected to a first encoder 1148. A first coupler 1149 is disposed between the output shaft of the first driving motor 1147 and the first driving shaft 1143. Through the first encoder 1148, the rotation speed and the rotation direction of the first driving shaft 1143 can be recorded in real time, so that the rotation angle information of the rolling piece 10 can be obtained.

Further, as shown in FIG. 6, a first thrust bearing 11433 is disposed between the top end of the first driving shaft 1143 and the inner wall of the accommodating cavity, and a first self-aligning bearing 11434 is disposed between the bottom end of the first driving shaft 1143 and the inner wall of the accommodating cavity. A second thrust bearing 11443 is disposed between the top end of the first driven shaft 1144 and the revolving frame 1140, and a second self-aligning bearing 11444 is disposed between the bottom end of the first driven shaft 1144 and the revolving frame 1140. The stability of the rotation of the rotating assembly 114 is improved.

Further, as shown in FIG. 6, the top end of the first driving shaft 1143 is provided with a first end cover 11431. The bottom end of the first driving shaft 1143 is provided with a second end cover 11432, and a sealing ring is disposed between both of the first end cover 11431 and the second end cover 11432 and the inner wall of the accommodating cavity. The top end of the first driven shaft 1144 is provided with a third end cover 11441, and the bottom end of the first driven shaft 1144 is provided with a fourth end cover 11442, and a sealing ring is disposed between both of the third end cover 11441 and the fourth end cover 11442 and the revolving frame 1140. Thereby, a sealed working environment is provided for the first driving shaft 1142 and the first driven shaft 1144.

Further, the two lifting guide rods 1112 can be fixedly connected to the top of the connecting plate 1141 at any position, as long as which does not affect rotation of the rotating assembly 114.

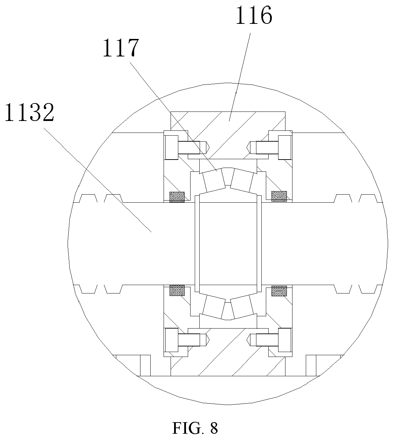

Specifically, as shown in FIGs. 4 to 9, a mounting frame 1131 is disposed at the bottom of the rotating assembly 114. The mounting frame 1131 is a rectangular block-shaped structure disposed in a horizontal direction, and the traverse assemblies 113 are all fixed on the mounting frame 1131. Wherein, the traverse assembly 113 comprises a guide moving part 1132, a second driving motor 1138, a second housing 1133 and a bearing seat 116. The guide moving part 1132, the second housing 1133 and the bearing seat 116 are all disposed at the top of the mounting frame 1131. A second driving shaft 1134 capable of rotating is disposed in the second housing 1133 along the horizontal direction. One end of the second driving shaft 1134 is connected to the output shaft of the second driving motor 1138. A middle portion of the second driving shaft 1134 is fixedly sleeved with a second driving gear 1136. A second driven shaft 1135 capable of rotating is disposed in the second housing 1133. The second driven shaft 1135 is parallel to the second driving shaft 1134. The second driven shaft 1135 is fixedly sleeved with a second driven gear 1137, and the second driven gear 1137 is meshed with the second driving gear 1136. One end of the second driven shaft 1135 is connected to one end of the guiding moving part 1132 by a second coupler 11321, and the other end of the guide moving part 1132 is rotatably disposed on the bearing seat 116 through the intermediate bearing 117. The top of the clamping body 115 is movably disposed on the guide moving part 1132. The second driving motor 1138 drives the second driving shaft 1134 to rotate. The second driving gear 1136 and the second driven gear 1137 that are meshed drive the guide moving part 1132 to rotate, to adjust the position of the clamping body 115 in the horizontal direction, thereby ensuring that the two clamping bodies 115 cooperate with each other to stably clamp the rolling piece 10.

Further, the guide moving part 1132 adopts a screw structure or a ball screw pair sleeved with a nut.

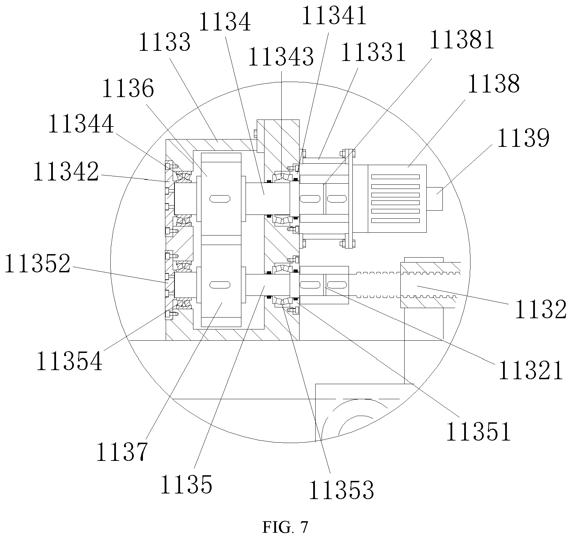

Further, as shown in FIG. 7, a second motor bracket 11331 is fixedly disposed on the outside of the second housing 1133. The second driving motor 1138 is mounted on the second motor bracket 11331. The second driving motor 1138 is connected to a second encoder 1139. A third coupler 11381 is disposed between the output shaft of the second driving motor 1138 and the second driving shaft 1134. The rotation speed and the direction of rotation of the guide moving part 1132 can be recorded in real time by the second encoder 1139, so as to obtain position information of the clamping body 115 in the horizontal direction.

Further, as shown in FIG. 7, a third thrust bearing 11343 is disposed between one end of the second driving shaft 1134 that is close to the second driving motor 1138 and the inner wall of the second housing 1133, and a third self-aligning bearing 11344 is disposed between one end of the second driving shaft 1134 that is away from the second driving motor 1138 and the inner wall of the second housing 1133. A fourth thrust bearing 11353 is disposed between one end of the second driven shaft 1135 that is close to the guide moving part 1132 and the inner wall of the second housing 1133, and a fourth self-aligning bearing 11354 is disposed between one end of the second driven shaft 1135 that is away from the guide moving part 1132 and the inner wall of the second housing 1133.

Further, as shown in FIG. 7, one end of the second driving shaft 1134 is provided with a fifth end cover 11341, the other end of the second driving shaft 1134 is provided with a sixth end cover 11342, and a sealing ring is disposed between both of the fifth end cover 11341 and the sixth end cover 11342 and the inner wall of the second housing 1133. One end of the second driven shaft 1135 is provided with a seventh end cover 11351, and the other end of the second driven shaft 1135 is provided with an eighth end cover 11352, and a sealing ring is disposed between both of the seventh end cover 11351 and the eighth end cover 11352 and the second housing 1133. Thereby, a sealed working environment is provided for the second driving shaft 1134 and the second driven shaft 1135.

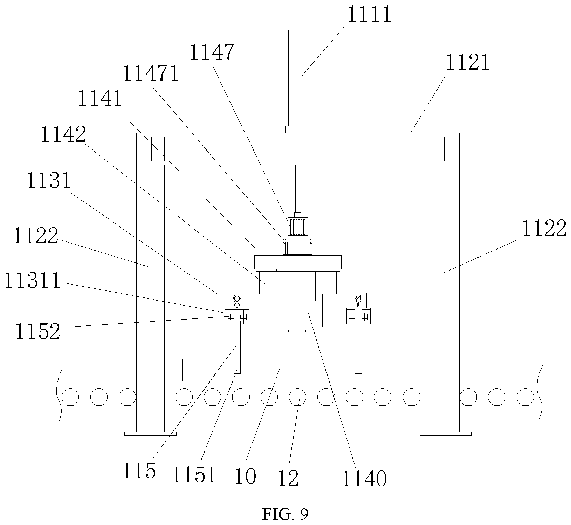

Specifically, as shown in FIGs. 4 and 9, a plurality of slide rails 11311 are disposed along a length direction of the rotary roller table 12 at the bottom of the mounting frame 1131. Pulleys 1152 are mounted respectively on both sides of the top of the clamping body 115 through pins. Top portions of the clamping bodies 115 are disposed in the corresponding slide rails 11311, and the pulley 1152 is cooperatively connected with the inner walls of the two opposite sides of the corresponding slide rails 11311. The slide rails 11311 ensures that the clamping body 115 can move smoothly along the guide moving part 1132.

Further, as shown in FIGs. 4, 5 and 9, the clamping body 115 is a long strip structure disposed in the vertical direction. An anti-slip boss 1151 is disposed at the bottom and on an outer wall, facing the side of the rolling piece 10, of the clamping body 115. Wherein the anti-slip boss 1151 can choose different materials according to the weight of the rolled product 10, so that different friction forces are generated between the clamping body 115 and the rolling piece 10, which can satisfy the stable clamping effect of the rolling piece 10.

In an optional embodiment of the present disclosure, as illustrated in FIG. 3, the entry side rotary roller table 1 and the exit side rotary roller table 3 are both composed of a plurality of first roller tables disposed side by side in a horizontal direction, each of the first roller tables is connected to a first roller table motor, and adjacent first roller table motors can drive the corresponding first roller tables to rotate in a same direction or in opposite directions. By controlling the rotation direction and the rotation speed of each of the first roller tables, it can be ensured that the rolling piece 10 smoothly rotates to the preset angle.

Further, when the rotation directions of the adjacent first roller tables on the entry side rotary roller table 1 and the exit side rotary roller table 3 are opposite to each other, the first roller tables can be grouped in odd and even numbers, wherein the first roller tables in a same odd or even group rotate in a same direction, while the first roller tables in an odd group and the first roller tables in an even group rotate in opposite directions (i.e., two adjacent first roller tables rotate in opposite directions, and two first roller tables with one first roller table therebetween rotate in a same direction).

Specifically, the first roller table motors may be disposed on the same side or on both sides of the entry side rotary roller table 1 and the exit side rotary roller table 3, as long as it is convenient to control the entry side rotary roller table 1 and the exit side rotary roller table 3. When it needs to control the first roller tables rotating in a same direction in the entry side rotary roller table 1 and the exit side rotary roller table 3, a gear distribution box may be connected to each of the first roller table motors, so as to centrally control the first roller tables rotating in the same direction, or each of the first roller tables is separately connected to one of the first roller table motors, so as to control each of the first roller tables independently.

Further, the entry side rotary roller table 1 and the exit side rotary roller table 3 may be connected to the first roller table motor in various transmission connection modes:
connection mode 1: the output shaft of the first roller table motor is connected to the first roller table through a coupling;
connection mode 2: the output shaft of the first roller table motor is connected to the first roller table through an extension shaft;
connection mode 3: the output shaft of the first roller table motor is connected to the first roller table through a speed reducer and a coupling in turn;
connection mode 4: the output shaft of the first roller table motor is connected to the first roller table through a speed reducer and an extension shaft in turn;
connection mode 5: the output shaft of the first roller table motor is connected to the first roller table through a speed reducer, a gear distribution box and a coupling in turn;
connection mode 6: the output shaft of the first roller table motor is connected to the first roller table through a speed reducer, a gear distribution box and an extension shaft in turn.

Specifically, the extension shaft may be, but is not limited to, a crosshead universal joint shaft, a drum gear j oint shaft or a combined j oint shaft.

Specifically, as illustrated in FIG. 3, each of both sides of the entry side rotary roller table 1 is provided with an inlet manipulator 8 which is provided with an inlet push plate 811, and the inlet manipulator 8 can control the inlet push plate 811 to move towards a middle portion of the entry side rotary roller table 1. Each of both sides of the exit side rotary roller table 3 is provided with an outlet manipulator 9 which is provided with an outlet push plate 911, and the outlet manipulator 9 can control the outlet push plate 911 to move towards a middle portion of the exit side rotary roller table 3. When the rolling piece 10 rotates to a preset angle, the rolling piece 10 is pushed to a preset position through the inlet side guides 8 and the outlet side guides 9.

Further, as illustrated in FIG. 3, an entry side feed roller 5 is disposed between an output end of the entry side rotary roller table 1 and the mill roller 2, and an exit side feed roller 6 is disposed between the mill roller 2 and an input end of the exit side rotary roller table 3. The entry side feed roller 5 and the exit side feed roller 6 are both composed of a plurality of second roller tables disposed side by side in a horizontal direction, one side of each of the second roller tables is provided with a second roller table motor which drives the second roller table to rotate, and an end portion of the second roller table is connected to the output shaft of the second roller table motor. The entry side feed roller 5 and the exit side feed roller 6 ensure the smooth input and output of the rolling piece 10 to the mill roller 2, thereby ensuring the smooth rolling of the rolling piece 10.

In an optional embodiment of the present disclosure, as shown in FIG. 3, the rolling mill area production equipment with rotating grabs further comprises an entry side conveying roller table 4 and an exit side conveying roller table 7, wherein an output end of the entry side conveying roller table 4 is connected to an input end of the entry side rotary roller table 1, and an input end of the exit side conveying roller table 7 is connected to an output end of the exit side rotary roller table 3. The entry side conveying roller table 4 and the exit side conveying roller table 7 are both composed of a plurality of third roller tables disposed side by side in a horizontal direction, one side of each of the third roller tables is provided with a third roller table motor which drives the third roller table to rotate, and an end portion of the third roller table is connected to an output shaft of the third roller table motor. The smooth input and output of the rolling piece 10 is ensured by the entry side conveying roller table 4 and the exit side conveying roller table 7.

In the working process of the rolling mill area production equipment with rotating grabs according to the present disclosure, when the rolling piece 10 enters the mill roll 2 through the entry side rotary roller table 1, according to the angle requirement of the corner rolling production process, the rolling piece 10 is rotated through the rotating grab device 11 on the entry side rotary roller table 1 to realize the forward rolling of the rolling piece 10. After the rolling piece 10 undergoes forward rolling, it enters the mill roll 2 through the exit side rotary roller table 3, according to the angle requirement of the angle rolling production process, the rolling piece 10 is rotated again by the rotating grab device 11 on the exit side rotary roller table 3 to realize reverse rolling of the rolling piece 10. According to the requirements of the production process, after the rolling piece 10 undergoes multiple passes of forward and reverse angle rolling production, it can be directly exported to the outside or subjected to subsequent conventional longitudinal rolling.

The rolling mill area production equipment with rotating grabs according to the present disclosure has the following features and advantages:
In the rolling mill area production equipment with rotating grabs, the rotating grab device 11 capable of performing lifting and rotating actions is disposed respectively on the entry side rotary roller table 1 and the exit side rotary roller table 3, in the process that the rolling piece 10 passes through the entry side rotary roller table 1 and the exit side rotary roller table 3, the rotating grab device 11 can clamp the rolling piece 10, and drives the rolling piece 10 to lift and rotate, thus the preset angle of the rolling piece 10 during the rolling process can be adjusted quickly and accurately, thereby meeting the requirements for the setting direction of the rolling piece 10, and shortening the adjustment time of adjusting the angle of the rolling piece 10; in addition, there is no need to manually adjust the lifting height and rotation angle of the rolling piece 10, the degree of automation is high, the operation difficulty is reduced, and the production rhythm and production efficiency are greatly improved.

### Embodiment 2

The present disclosure provides a hot rolling production line, comprising a rolling mill mounting area, in which the aforementioned rolling mill area production equipment with rotating grabs is disposed.

In one optional embodiment of the present disclosure, the rolling mill mounting area is a single-stand rolling mill area, in which the rolling mill area production equipment with rotating grabs is disposed, wherein a rolling mill is disposed in the single-stand rolling mill area, so as to output the rolling piece 10 after rough rolling and finish rolling thereof are completed.

In another optional embodiment of the present disclosure, the rolling mill mounting area is a double-stand rolling mill area, that is, the rolling mill mounting area comprises a rough rolling mill area and a finishing rolling mill area, an output end of the rough rolling mill area being connected to an input end of the finishing rolling mill area, and the rough rolling mill area and/or the finishing rolling mill area being provided therein with the rolling mill area production equipment with rotating grabs. In which, the rough rolling mill area and the finishing rolling mill area are provided therein with one rolling mill, respectively, and the rolling piece 10 passes through the rough rolling mill area for a rough rolling treatment, then passes through the finishing rolling mill area for a finish rolling treatment, and finally is output.

The characteristics and advantages of the hot rolling production line according to the present disclosure are as follows.

In the hot rolling production line, the rolling mill area production equipment with rotating grabs is disposed in the rolling mill installation area. The rolling mill area production equipment with rotating grabs can drive the rolling piece 10 to lift and rotate, the preset angle of the rolling piece 10 during the rolling process can be adjusted quickly and accurately, thereby shortening the adjustment time of adjusting the angle of the rolling piece 10, improving the automation degree of the hot rolling production line, reducing the difficulty of operation, and improving production efficiency of the hot rolling production line.

The foregoing is merely an illustrative embodiment of the disclosure and is not intended to limit the scope of the disclosure. Any equivalent changes and modifications made by those skilled in the art without departing from the concepts and principles of the present disclosure shall fall within the scope of the present disclosure.

## Claims

1. A rolling mill area production equipment with rotating grabs, comprising a rotating grab device (11) capable of lifting and rotating, and a rotary roller table (12), wherein the rotating grab device (11) is correspondingly disposed over the rotary roller table (12), the rotating grab device (11) correspondingly clamps a rolling piece (10) passing through the rotary roller table (12) and drives the rolling piece (10) to lift and rotate, such that a center line of the rolling piece (10) and a rolling center line form a preset angle;
wherein the rotating grab device (11) comprises a mounting frame (112), a lifting assembly (111), a rotating assembly (114) and at least two clamping assemblies, the mounting frame (112) is fixedly erected above the rotary roller table (12), the lifting assembly (111) is disposed at the top of the mounting frame (112), the rotating assembly (114) is disposed at the bottom of the lifting assembly (111), and the at least two clamping assemblies are disposed along a length direction of the rotary roller table (12);
each clamping assembly comprises two clamping bodies (115) in opposite moving directions, each of the clamping bodies (115) is movably disposed at the bottom of a corresponding traverse assembly (113), and two traverse assemblies (113) are on the same horizontal straight line, so that the two clamping bodies (115) move in opposite directions on the same horizontal straight line, and each of the transverse assemblies (113) is disposed at the bottom of the rotating assembly (114);
wherein the rotating assembly (114) comprises a connecting plate (1141) and a first housing (1142), wherein the first housing (1142) is disposed at the bottom of the connecting plate (1141), and an accommodating cavity is formed between the first housing (1142) and the connecting plate (1141), a first driving shaft (1143) capable of rotating is disposed in a vertical direction within the accommodating cavity, and a top end of the first driving shaft (1143) is connected to an output shaft of a first driving motor (1147), and the first driving shaft (1143) is fixedly sleeved with a first driving gear (1145), a first driven shaft (1144) parallel to the first driving shaft (1143) is fixedly disposed within the accommodating cavity, a revolving frame (1140) having a cylindrical shape is rotatably sleeved outside the first driven shaft (1144), the revolving frame (1140) is fixedly sleeved with a first driven gear (1146), the first driven gear (1146) is meshed with the first driving gear (1145), and the bottom of the revolving frame (1140) is connected to the traverse assemblies (113);
**characterized in that**,
a mounting frame (1131) is disposed at the bottom of the rotating assembly (114), and the traverse assemblies (113) are all fixed on the mounting frame (1131); the traverse assembly (113) each comprising a guide moving part (1132), a second driving motor (1138), a second housing (1133), and a bearing seat (116); the guide moving part (1132), the second housing (1133) and the bearing seat (116) are all disposed at the top of the mounting frame (1131), a second driving shaft (1134) capable of rotating is disposed in the second housing (1133) along a horizontal direction, one end of the second driving shaft (1134) is connected to an output shaft of the second driving motor (1138), and the second driving shaft (1134) is fixedly sleeved with a second driving gear (1136); a second driven shaft (1135) parallel to the second driving shaft (1134) is disposed in the second housing (1133), the second driven shaft (1135) is fixedly sleeved with a second driven gear (1137), and the second driven gear (1137) is meshed with the second driving gear (1136); one end of the second driven shaft (1135) is connected to one end of the guiding moving part (1132) through a second coupler (11321), and the other end of the guiding moving part (1132) is rotatably disposed on the bearing seat (116) through an intermediate bearing (117), and the top of the clamping body (115) is movably disposed on the guide moving part (1132), the second driving motor (1138) drives the second driving shaft (1134) to rotate, the second driving gear 1136 and the second driven gear 1137 that are meshed drive the guide moving part (1132) to rotate, to adjust a position of the clamping body (115) in a horizontal direction,
wherein the guide moving part (1132) is a screw structure or a ball screw pair sleeved with a nut.

2. The rolling mill area production equipment with rotating grabs according to claim 1, wherein the rotary roller table (12) comprises an entry side rotary roller table (1) and an exit side rotary roller table (3); there are at least two groups of rotating grab device (11) which are correspondingly disposed on the entry side rotary roller table (1) and over the exit side rotary roller table (3), and a mill roll (2) is disposed between the entry side rotary roller table (1) and the exit side rotary roller table (3).

3. The rolling mill area production equipment with rotating grabs according to claim 1, wherein the mounting frame (112) comprises a connecting bracket (1121) and two upright posts (1122); the two upright posts (1122) are disposed on both sides of the rotary roller table (12) respectively; a bottom end of each of the two upright posts (1122) is fixed on a mounting plane, and top ends of the two upright posts (1122) are connected to two ends of the connecting bracket (1121); and the lifting assembly (111) is disposed on the connecting bracket (1121).

4. The rolling mill area production equipment with rotating grabs according to claim 3, wherein the lifting assembly (111) comprises a lifting cylinder (1111), a fixed end of the lifting cylinder (1111) is mounted on the top of the connecting bracket (1121), and a piston rod of the lifting cylinder (1111) passes through the connecting bracket (1121) in a vertical direction and is connected to the top of the rotating assembly (114).

5. The rolling mill area production equipment with rotating grabs according to claim 4, wherein the lifting assembly (111) further comprises two lifting guide rods (1112) and two lifting guide sleeves (1113), the two lifting guide sleeves (1113) are respectively disposed on the connecting bracket (1121) and are located respectively on both sides of the lifting cylinder (1111), the lifting guide rods (1112) are slidably disposed in the corresponding lifting guide sleeves (1113), and the bottom ends of the lifting guide rods (1112) pass through the corresponding lifting guide sleeves (1113) and are connected to the top of the rotating assembly (114).

6. The rolling mill area production equipment with rotating grabs according to claim 1, wherein a first motor bracket (11471) is disposed on the top of the connecting plate (1141), the first driving motor (1141) is mounted on the first motor bracket (11471), a first encoder (1148) is connected to the first driving motor (1147), and a first coupler (1149) is disposed between an output shaft of the first driving motor (1147) and the first driving shaft (1143).

7. The rolling mill area production equipment with rotating grabs according to claim 1,
wherein a second motor bracket (11331) is disposed on the outside of the second housing (1133), the second driving motor (1138) is mounted on the second motor bracket (11331), a second encoder (1139) is connected to the second driving motor (1138), and a third coupler (11381) is disposed between an output shaft of the second driving motor (1138) and the second driving shaft (1134); and/or
wherein a plurality of slide rails (11311) are disposed at the bottom of the mounting frame (1131) along a length direction of the rotary roller table (12), pulleys (1152) are mounted respectively on both sides of the top of the clamping body (115), top portions of the clamping bodies (115) are cooperatively connected with the corresponding slide rails (11311) through the pulleys (1152).

8. The rolling mill area production equipment with rotating grabs according to claim 7, wherein the clamping body (115) is a long strip structure disposed in a vertical direction, an anti-slip boss (1151) is disposed at the bottom and on an outer wall, facing the rolling piece (10), of the clamping body (115).

9. The rolling mill area production equipment with rotating grabs according to claim 2, wherein the entry side rotary roller table (1) and the exit side rotary roller table (3) are both composed of a plurality of first roller tables disposed side by side in a horizontal direction, and the first roller tables are connected to first roller table motors respectively, and the adjacent first roller table motors are able to drive the corresponding first roller tables to rotate in a same direction or in opposite directions.

10. The rolling mill area production equipment with rotating grabs according to claim 2, wherein an inlet stand roll (5) is disposed between an output end of the entry side rotary roller table (1) and the mill roll (2), and an outlet stand roll (6) is disposed between the mill roll (2) and an input end of the exit side rotary roller table (3);
wherein the inlet stand roll (5) and the outlet stand roll (6) are both composed of a plurality of second roller tables disposed side by side in a horizontal direction, one side of each of the second roller tables is provided with a second roller table motor by which the second roller table is driven to rotate.

11. The rolling mill area production equipment with rotating grabs according to claim 1, further comprising an entry side conveying roller table (4) and an exit side conveying roller table (7), wherein an output end of the entry side conveying roller table (4) is connected to an input end of the entry side rotary roller table (1), and an input end of the exit side conveying roller table (7) is connected to an output end of the exit side rotary roller table (3);
wherein the entry side conveying roller table (4) and the exit side conveying roller table (7) are both composed of a plurality of third roller tables disposed side by side in a horizontal direction, and one side of each of the third roller tables is disposed with a third roller table motor by which the third roller table is driven to rotate.

12. A hot rolling production line, comprising a rolling mill installation area, wherein the rolling mill installation area is provided with the rolling mill area production equipment with rotating grabs according to any of claims 1 to 11.

13. The hot rolling production line according to claim 12, wherein the rolling mill installation area is a single-stand rolling mill area, and the single-stand rolling mill area is disposed therein with the rolling mill area production equipment with rotating grabs; and/or
wherein the rolling mill installation area comprises a rough rolling mill area and a finishing rolling mill area, an output end of the rough rolling mill area is connected to an input end of the finishing rolling mill area, and the rolling mill area production equipment with rotating grabs is disposed in the rough rolling mill area and/or the finishing rolling mill area.

## Patentansprüche

1. Walzwerkbereich-Produktionsausrüstung mit rotierenden Greifern, umfassend eine rotierende Greifvorrichtung (11), die zum Anheben und Rotieren fähig ist, und einen Drehrollentisch (12), wobei die rotierende Greifvorrichtung (11) entsprechend über dem Drehrollentisch (12) angeordnet ist, wobei die rotierende Greifvorrichtung (11) ein Rollstück (10), das sich über den Drehrollentisch (12) hinwegbewegt, entsprechend einspannt und das Rollstück (10) dazu bringt, derart angehoben und rotiert zu werden, dass eine Mittellinie des Rollstücks (10) und eine Rollenmittellinie einen voreingestellten Winkel bilden;
wobei die rotierende Greifvorrichtung (11) einen Montagerahmen (112), eine Hebebaugruppe (111), eine Drehbaugruppe (114) und mindestens zwei Einspannbaugruppen umfasst, wobei der Montagerahmen (112) fest über dem Drehrollentisch (12) aufgestellt ist, die Hebebaugruppe (111) an der Oberseite des Montagerahmens (112) angeordnet ist, die Drehbaugruppe (114) an der Unterseite der Hebebaugruppe (111) angeordnet ist, und die mindestens zwei Einspannbaugruppen entlang einer Längenrichtung des Drehrollentischs (12) angeordnet sind;
wobei jede Einspannbaugruppe zwei Spannkörper (115) in entgegengesetzten Bewegungsrichtungen umfasst, wobei jeder der Spannkörper (115) beweglich an der Unterseite einer entsprechenden Traversenbaugruppe (113) angeordnet ist und zwei Traversenbaugruppen (113) auf derselben horizontalen geraden Linie liegen, sodass sich die beiden Spannkörper (115) in entgegengesetzten Richtungen auf derselben horizontalen geraden Linie bewegen, und jede der Traversenbaugruppen (113) an der Unterseite der Drehbaugruppe (114) angeordnet ist;
wobei die Drehbaugruppe (114) eine Verbindungsplatte (1141) und ein erstes Gehäuse (1142) umfasst, wobei das erste Gehäuse (1142) an der Unterseite der Verbindungsplatte (1141) angeordnet ist und ein Aufnahmehohlraum zwischen dem ersten Gehäuse (1142) und der Verbindungsplatte (1141) gebildet ist, wobei eine erste Antriebswelle (1143), die sich drehen kann, in einer vertikalen Richtung innerhalb des Aufnahmehohlraums angeordnet ist und ein oberes Ende der ersten Antriebswelle (1143) mit einer Ausgangswelle eines ersten Antriebsmotors (1147) verbunden ist, und wobei die erste Antriebswelle (1143) fest mit einem ersten Antriebszahnrad (1145) ummantelt ist, eine erste Abtriebswelle (1144) parallel zu der ersten Antriebswelle (1143) fest innerhalb des Aufnahmehohlraums angeordnet ist, ein Drehrahmen (1140), der eine zylindrische Form aufweist, außen an der ersten Abtriebswelle (1144) drehbar ummantelt ist, der Drehrahmen (1140) fest mit einem ersten Abtriebszahnrad (1146) ummantelt ist, das erste Abtriebszahnrad (1146) in das erste Antriebszahnrad (1145) eingreift und die Unterseite des Drehrahmens (1140) mit den Traversenbaugruppen (113) verbunden ist;
**dadurch gekennzeichnet, dass**
ein Montagerahmen (1131) an der Unterseite der Drehbaugruppe (114) angeordnet ist und die Traversenbaugruppen (113) alle an dem Montagerahmen (1131) befestigt sind; wobei die Traversenbaugruppe (113) jeweils ein Führungsbewegungsteil (1132), einen zweiten Antriebsmotor (1138), ein zweites Gehäuse (1133) und einen Lagersitz (116) umfassen; wobei das Führungsbewegungsteil (1132), das zweite Gehäuse (1133) und der Lagersitz (116) alle an der Oberseite des Montagerahmens (1131) angeordnet sind, eine zweite Antriebswelle (1134), die sich drehen kann, in dem zweiten Gehäuse (1133) entlang einer horizontalen Richtung angeordnet ist, ein Ende der zweiten Antriebswelle (1134) mit einer Ausgangswelle des zweiten Antriebsmotors (1138) verbunden ist und die zweite Antriebswelle (1134) fest mit einem zweiten Antriebszahnrad (1136) ummantelt ist; wobei eine zweite Abtriebswelle (1135) parallel zu der zweiten Antriebswelle (1134) in dem zweiten Gehäuse (1133) angeordnet ist, die zweite Abtriebswelle (1135) mit einem zweiten Abtriebszahnrad (1137) fest ummantelt ist und das zweite Abtriebszahnrad (1137) in das zweite Antriebszahnrad (1136) eingreift; wobei ein Ende der zweiten Abtriebswelle (1135) über einen zweiten Koppler (11321) mit einem Ende des Führungsbewegungsteils (1132) verbunden ist und das andere Ende des Führungsbewegungsteils (1132) über ein Zwischenlager (117) drehbar an dem Lagersitz (116) angeordnet ist, und wobei die Oberseite des Spannkörpers (115) beweglich an dem Führungsbewegungsteil (1132) angeordnet ist, wobei der zweite Antriebsmotor (1138) die zweite Antriebswelle (1134) so antreibt, dass sie sich dreht, wobei das zweite Antriebszahnrad (1136) und das zweite Abtriebszahnrad (1137), die ineinandergreifen, den Führungsbewegungsteil (1132) so antreiben, dass er sich dreht, um eine Position des Spannkörpers (115) in einer horizontalen Richtung anzupassen,
wobei das Führungsbewegungsteil (1132) eine Spindelstruktur oder ein mit einer Mutter ummanteltes Kugelumlaufspindelpaar ist.

2. Walzwerkbereich-Produktionsausrüstung mit rotierenden Greifern nach Anspruch 1, wobei der Drehrollentisch (12) einen eintrittsseitigen Drehrollentisch (1) und einen austrittsseitigen Drehrollentisch (3) umfasst; mindestens zwei Gruppen von rotierenden Greifvorrichtung (11) vorhanden sind, die entsprechend auf dem eintrittsseitigen Drehrollentisch (1) und einem über dem austrittsseitigen Drehrollentisch (3) angeordnet sind, und ein Walzwerk (2) zwischen dem eintrittsseitigen Drehrollentisch (1) und dem austrittsseitigen Drehrollentisch (3) angeordnet ist.

3. Walzwerkbereich-Produktionsausrüstung mit rotierenden Greifern nach Anspruch 1, wobei der Montagerahmen (112) einen Verbindungsbügel (1121) und zwei aufrechte Pfosten (1122) umfasst; wobei die zwei aufrechten Pfosten (1122) jeweils auf beiden Seiten des Drehrollentischs (12) angeordnet sind; wobei ein unteres Ende von jedem der zwei aufrechten Pfosten (1122) auf einer Montageebene befestigt ist und obere Enden der zwei aufrechten Pfosten (1122) mit zwei Enden des Verbindungsbügels (1121) verbunden sind; und wobei die Hebebaugruppe (111) an dem Verbindungsbügel (1121) angeordnet ist.

4. Walzwerkbereich- Produktionsausrüstung mit rotierenden Greifern nach Anspruch 3, wobei die Hebebaugruppe (111) einen Hebezylinder (1111) umfasst, ein festes Ende des Hebezylinders (1111) an der Oberseite des Verbindungsbügels (1121) angebracht ist und eine Kolbenstange des Hebezylinders (1111) in vertikaler Richtung durch den Verbindungsbügel (1121) hindurchgeht und mit der Oberseite der Drehbaugruppe (114) verbunden ist.

5. Walzwerkbereich-Produktionsausrüstung mit rotierenden Greifern nach Anspruch 4, wobei die Hebebaugruppe (111) ferner zwei Hebeführungsstangen (1112) und zwei Hebeführungshülsen (1113) umfasst, die zwei Hubführungshülsen (1113) jeweils an dem Verbindungsbügel (1121) angeordnet sind und sich jeweils auf beiden Seiten des Hebezylinders (1111) befinden, die Hebeführungsstangen (1112) verschiebbar in den entsprechenden Hebeführungshülsen (1113) angeordnet sind und die unteren Enden der Hebeführungsstangen (1112) durch die entsprechenden Hebeführungshülsen (1113) hindurchgehen und mit der Oberseite der Drehbaugruppe (114) verbunden sind.

6. Walzwerkbereich-Produktionsausrüstung mit rotierenden Greifern nach Anspruch 1, wobei eine erste Motorhalterung (11471) an der Oberseite der Verbindungsplatte (1141) angeordnet ist, der erste Antriebsmotor (1141) an der ersten Motorhalterung (11471) angebracht ist, ein erster Geber (1148) mit dem ersten Antriebsmotor (1147) verbunden ist und ein erster Koppler (1149) zwischen einer Ausgangswelle des ersten Antriebsmotors (1147) und der ersten Antriebswelle (1143) angeordnet ist.

7. Walzwerkbereich-Produktionsausrüstung mit rotierenden Greifern nach Anspruch 1,
wobei eine zweite Motorhalterung (11331) an der Außenseite des zweiten Gehäuses (1133) angeordnet ist, der zweite Antriebsmotor (1138) an der zweiten Motorhalterung (11331) angebracht ist, ein zweiter Geber (1139) mit dem zweiten Antriebsmotor (1138) verbunden ist und ein dritter Koppler (11381) zwischen einer Ausgangswelle des zweiten Antriebsmotors (1138) und der zweiten Antriebswelle (1134) angeordnet ist; und/oder
wobei eine Vielzahl von Gleitschienen (11311) an der Unterseite des Montagerahmens (1131) entlang einer Längenrichtung des Drehrollentischs (12) angeordnet sind, wobei jeweils auf beiden Seiten der Oberseite des Spannkörpers (115) Rollen (1152) angebracht sind, wobei obere Abschnitte der Spannkörper (115) über die Rollen (1152) zusammenwirkend mit den entsprechenden Gleitschienen (11311) verbunden sind.

8. Walzwerkbereich-Produktionsausrüstung mit rotierenden Greifern nach Anspruch 7, wobei der Spannkörper (115) eine lange Streifenstruktur ist, die in vertikaler Richtung angeordnet ist, wobei ein Antirutschvorsprung (1151) an der Unterseite und an einer dem Rollstück (10) zugewandten Außenseite des Spannkörpers (115) angeordnet ist.

9. Walzwerkbereich-Produktionsausrüstung mit rotierenden Greifern nach Anspruch 2, wobei der eintrittsseitige Drehrollentisch (1) und der austrittsseitige Drehrollentisch (3) beide aus einer Vielzahl von ersten Rollentischen bestehen, die in horizontaler Richtung nebeneinander angeordnet sind, und die ersten Rollentische jeweils mit ersten Rollentischmotoren verbunden sind und die angrenzenden ersten Rollentischmotoren in der Lage sind, die entsprechenden ersten Rollentische so anzutreiben, dass sie sich in einer gleichen Richtung oder in entgegengesetzten Richtungen drehen.

10. Walzwerkbereich-Produktionsausrüstung mit rotierenden Greifern nach Anspruch 2, wobei eine Einlassgerüstwalze (5) zwischen einem Ausgangsende des eintrittsseitigen Drehrollentischs (1) und dem Walzwerk (2) angeordnet ist und eine Auslassgerüstwalze (6) zwischen dem Walzwerk (2) und einem Eingangsende des austrittsseitigen Drehrollentischs (3) angeordnet ist;
wobei die Einlassgerüstwalze (5) und die Auslassgerüstwalze (6) beide aus einer Vielzahl von zweiten Rollentischen bestehen, die in horizontaler Richtung nebeneinander angeordnet sind, wobei eine Seite jedes der zweiten Rollentische mit einem zweiten Rollentischmotor bereitgestellt ist, durch den der zweite Rollentisch so angetrieben wird, dass er sich dreht.

11. Walzwerkbereich-Produktionsausrüstung mit rotierenden Greifern nach Anspruch 1, ferner umfassend einen eintrittsseitigen Transportrollentisch (4) und einen austrittsseitigen Transportrollentisch (7), wobei ein Ausgangsende des eintrittsseitigen Transportrollentischs (4) mit einem Eingangsende des eintrittsseitigen Drehrollentischs (1) verbunden ist und ein Eingangsende des austrittsseitigen Transportrollentischs (7) mit einem Ausgangsende des austrittsseitigen Drehrollentischs (3) verbunden ist;
wobei der eintrittsseitige Transportrollentisch (4) und der austrittsseitige Transportrollentisch (7) beide aus einer Vielzahl von dritten Rollentischen bestehen, die in horizontaler Richtung nebeneinander angeordnet sind, und wobei eine Seite jedes der dritten Rollentische mit einem dritten Rollentischmotor angeordnet ist, durch den der dritte Rollentisch so angetrieben wird, dass er sich dreht.

12. Warmwalzproduktionslinie, umfassend einen Walzwerkinstallationsbereich, wobei der Walzwerkinstallationsbereich mit der Walzwerkbereich-Produktionsausrüstung mit rotierenden Greifern nach einem der Ansprüche 1 bis 11 bereitgestellt ist.

13. Warmwalzproduktionslinie nach Anspruch 12, wobei der Walzwerkinstallationsbereich ein eingerüstiger Walzwerkbereich ist und der eingerüstige Walzwerkbereich darin mit der Walzwerkbereich-Produktionsausrüstung mit rotierenden Greifern angeordnet ist; und/oder
wobei der Walzwerkinstallationsbereich einen Vorwalzwerkbereich und einen Fertigwalzwerkbereich umfasst, ein Ausgangsende des Vorwalzwerkbereichs mit einem Eingangsende des Fertigwalzwerkbereichs verbunden ist und die Walzwerkbereich-Produktionsausrüstung mit rotierenden Greifern in dem Vorwalzwerkbereich und/oder dem Fertigwalzwerkbereich angeordnet ist.

## Revendications

1. Équipement de production de zone de laminoir avec grappins rotatifs comprenant un dispositif de préhension rotatif (11) capable de se soulever et de tourner, et une table à rouleaux rotatifs (12), dans lequel le dispositif de préhension rotatif (11) est disposé de manière correspondante sur la table à rouleaux rotatifs (12), le dispositif de préhension rotatif (11) serre de manière correspondante une pièce de laminage (10) passant à travers la table à rouleaux rotatifs (12) et entraîne la pièce de laminage (10) pour qu'elle se soulève et tourne, de telle sorte qu'une ligne centrale de la pièce de laminage (10) et une ligne centrale de laminage forment un angle prédéfini ;
dans lequel le dispositif de préhension rotatif (11) comprend un cadre de montage (112), un ensemble de levage (111), un ensemble rotatif (114) et l'au moins deux ensembles de serrage, le cadre de montage (112) est érigé fixement au-dessus de la table à rouleaux rotatifs (12), l'ensemble de levage (111) est disposé au sommet du cadre de montage (112), l'ensemble rotatif (114) est disposé au niveau du bas de l'ensemble de levage (111), et les au moins deux ensembles de serrage sont disposés le long d'une direction de longueur de la table à rouleaux rotatifs (12) ;
chaque ensemble de serrage comprend deux corps de serrage (115) dans des sens de déplacement opposés, chacun des corps de serrage (115) est disposé de manière mobile au niveau du bas d'un ensemble transversal correspondant (113), et deux ensembles transversaux (113) sont sur la même ligne droite horizontale, de sorte que les deux corps de serrage (115) se déplacent dans des sens opposés sur la même ligne droite horizontale, et chacun des ensembles transversaux (113) est disposé au niveau du bas de l'ensemble rotatif (114) ;
dans lequel l'ensemble rotatif (114) comprend une plaque de raccordement (1141) et un premier logement (1142), dans lequel le premier logement (1142) est disposé au niveau du bas de la plaque de raccordement (1141), et une cavité de réception est formée entre le premier logement (1142) et la plaque de raccordement (1141), un premier arbre menant (1143) capable de tourner est disposé dans une direction verticale au sein de la cavité de réception, et une extrémité de sommet du premier arbre menant (1143) est raccordée à un arbre de sortie d'un premier moteur d'entraînement (1147), et le premier arbre menant (1143) est manchonné de manière fixe avec un premier engrenage d'entraînement (1145), un premier arbre mené (1144) parallèle au premier arbre menant (1143) est disposé de manière fixe au sein de la cavité de réception, un cadre rotatif (1140) ayant une forme cylindrique est manchonné de manière rotative à l'extérieur du premier arbre entraîné (1144), le cadre rotatif (1140) est manchonné de manière fixe avec un premier engrenage mené (1146), le premier engrenage mené (1146) est en prise avec le premier engrenage menant (1145), et le bas du cadre rotatif (1140) est raccordé aux ensembles transversaux (113) ;
**caractérisé en ce que**,
un cadre de montage (1131) est disposé au niveau du bas de l'ensemble rotatif (114), et les ensembles transversaux (113) sont tous fixés sur le cadre de montage (1131) ; l'ensemble transversal (113) comprenant chacun une partie mobile de guidage (1132), un deuxième moteur d'entraînement (1138), un deuxième logement (1133), et un siège de roulement (116) ; la partie mobile de guidage (1132), le deuxième logement (1133) et le siège de roulement (116) sont tous disposés au sommet du cadre de montage (1131), un deuxième arbre menant (1134) capable de tourner est disposé dans le deuxième logement (1133) le long d'une direction horizontale, une extrémité du deuxième arbre menant (1134) est raccordée à un arbre de sortie du deuxième moteur d'entraînement (1138), et le deuxième arbre menant (1134) est manchonné de manière fixe avec un deuxième engrenage menant (1136) ; un deuxième arbre mené (1135) parallèle au deuxième arbre menant (1134) est disposé dans le deuxième logement (1133), le deuxième arbre mené (1135) est manchonné de manière fixe avec un deuxième engrenage mené (1137), et le deuxième engrenage mené (1137) est en prise avec le deuxième engrenage menant (1136) ; une extrémité du deuxième arbre mené (1135) est raccordée à une extrémité de la partie mobile de guidage (1132) par l'intermédiaire d'un deuxième coupleur (11321), et l'autre extrémité de la partie mobile de guidage (1132) est disposée de manière rotative sur le siège de roulement (116) par l'intermédiaire d'un roulement intermédiaire (117), et le sommet du corps de serrage (115) est disposée de manière mobile sur la partie mobile de guidage (1132), le deuxième moteur d'entraînement (1138) entraîne le deuxième arbre menant (1134) pour qu'il tourne, le deuxième engrenage menant (1136) et le deuxième engrenage mené (1137) qui sont en prise entraînent la partie mobile de guidage (1132) pour qu'elle tourne, afin de régler une position du corps de serrage (115) dans une direction horizontale,
dans lequel la partie mobile de guidage (1132) est une structure de vis ou une paire de vis à billes gainées avec un écrou.

2. Équipement de production de zone de laminoir avec grappins rotatifs selon la revendication 1, dans lequel la table à rouleaux rotatifs (12) comprend une table à rouleaux rotatifs côté entrée (1) et une table à rouleaux rotatifs côté sortie (3) ; il existe au moins deux groupes de dispositifs de préhension rotatifs (11) qui sont disposés de manière correspondante sur la table à rouleaux rotatifs côté entrée (1) et sur la table à rouleaux rotatifs côté sortie (3), et un laminoir (2) est disposé entre la table à rouleaux rotatifs côté entrée (1) et de la table à rouleaux rotatifs côté sortie (3).

3. Équipement de production de zone de laminage avec des grappins rotatifs selon la revendication 1, dans lequel le cadre de montage (112) comprend un support de raccordement (1121) et deux montants verticaux (1122) ; les deux montants verticaux (1122) sont disposés des deux côtés de la table à rouleaux rotatifs (12) respectivement ; une extrémité basse de chacun des deux montants verticaux (1122) est fixée sur un plan de montage, et les extrémités de sommet des deux montants verticaux (1122) sont raccordées aux deux extrémités du support de raccordement (1121) ; et l'ensemble de levage (111) est disposé sur le support de raccordement (1121).

4. Équipement de production de zone de laminage avec grappins rotatifs selon la revendication 3, dans lequel l'ensemble de levage (111) comprend un cylindre de levage (1111), une extrémité fixe du cylindre de levage (1111) est montée sur le sommet du support de raccordement (1121), et une tige de piston du cylindre de levage (1111) passe à travers le support de raccordement (1121) dans une direction verticale et est raccordée au sommet de l'ensemble rotatif (114).

5. Équipement de production de zone de laminage avec des grappins rotatifs selon la revendication 4, dans lequel l'ensemble de levage (111) comprend en outre deux tiges de guidage de levage (1112) et deux manchons de guidage de levage (1113), les deux manchons de guidage de levage (1113) sont respectivement disposés sur le support de raccordement (1121) et sont situés respectivement des deux côtés du cylindre de levage (1111), les tiges de guidage de levage (1112) sont disposées de manière coulissante dans les manchons de guidage de levage (1113) correspondants, et les extrémités basses des tiges de guidage de levage (1112) passent à travers les manchons de guidage de levage (1113) correspondants et sont raccordées au sommet de l'ensemble rotatif (114).

6. Équipement de production de zone de laminage avec grappins rotatifs selon la revendication 1, dans lequel un premier support de moteur (11471) est disposé sur le sommet de la plaque de raccordement (1141), le premier moteur d'entraînement (1141) est monté sur le premier support de moteur (11471), un premier codeur (1148) est raccordé au premier moteur d'entraînement (1147), et un premier coupleur (1149) est disposé entre un arbre de sortie du premier moteur d'entraînement (1147) et le premier arbre menant (1143) .

7. Équipement de production de zone de laminage avec des grappins rotatifs selon la revendication 1,
dans lequel un deuxième support de moteur (11331) est disposé sur l'extérieur du deuxième logement (1133), le deuxième moteur d'entraînement (1138) est monté sur le deuxième support de moteur (11331), un deuxième codeur (1139) est raccordé au deuxième moteur d'entraînement (1138), et un troisième coupleur (11381) est disposé entre un arbre de sortie du deuxième moteur d'entraînement (1138) et le deuxième arbre menant (1134) ; et/ou
dans lequel une pluralité de rails de coulissement (11311) sont disposés au niveau du bas du cadre de montage (1131) le long d'une direction de longueur de la table à rouleaux rotatifs (12), des poulies (1152) sont montées respectivement sur les deux côtés du sommet du corps de serrage (115), les portions de sommet des corps de serrage (115) sont raccordées de manière coopérative aux rails de coulissement correspondants (11311) par l'intermédiaire des poulies (1152).

8. Équipement de production de zone de laminage avec grappins rotatifs selon la revendication 7, dans lequel le corps de serrage (115) est une structure de bande longue disposée dans une direction verticale, un bossage antidérapant (1151) est disposé au niveau du bas et sur une paroi extérieure, faisant face à la pièce de laminage (10), du corps de serrage (115).

9. Équipement de production de zone de laminoir avec grappins rotatifs selon la revendication 2, dans lequel la table à rouleaux rotatifs côté entrée (1) et la table à rouleaux rotatifs côté sortie (3) sont toutes deux composées d'une pluralité de premières tables à rouleaux disposées côte à côte dans une direction horizontale, et les premières tables à rouleaux sont raccordées à des premiers moteurs de tables à rouleaux respectivement, et les premiers moteurs de tables à rouleaux adjacents sont capables d'entraîner les premières tables à rouleaux correspondantes en rotation dans une même direction ou des directions opposées.

10. Équipement de production de zone de laminoir avec grappins rotatifs selon la revendication 2, dans lequel un rouleau de cage d'entrée (5) est disposé entre une extrémité de sortie de la table à rouleaux rotatifs côté entrée (1) et le laminoir (2), et un rouleau de cage de sortie (6) est disposé entre le laminoir (2) et une extrémité d'entrée de la table à rouleaux rotatifs côté sortie (3) ;
dans lequel le rouleau de cage d'entrée (5) et le rouleau de cage de sortie (6) sont tous deux composés d'une pluralité de deuxièmes tables à rouleaux disposées côte à côte dans une direction horizontale, un côté de chacune des deuxièmes tables à rouleaux est muni d'un deuxième moteur de table à rouleaux par lequel la deuxième table à rouleaux est entraînée en rotation.

11. Équipement de production de zone de laminoir avec grappins rotatifs selon la revendication 1, comprenant en outre une table à rouleaux de transport côté entrée (4) et une table à rouleaux de transport côté sortie (7), dans lequel une extrémité de sortie de la table à rouleaux de transport côté entrée (4) est raccordée à une extrémité d'entrée de la table de rouleaux rotatifs côté entrée (1), et une extrémité d'entrée de la table à rouleaux de transport côté sortie (7) est raccordée à une extrémité de sortie de la table à rouleaux rotatifs côté sortie (3) ;
dans lequel la table à rouleaux de transport côté entrée (4) et la table à rouleaux de transport côté sortie (7) sont toutes deux composées d'une pluralité de troisièmes tables à rouleaux disposées côte à côte dans une direction horizontale, et un côté de chacune des troisièmes tables à rouleaux est disposé avec un troisième moteur de table à rouleaux par lequel la troisième table à rouleaux est entraînée en rotation.

12. Chaîne de production de laminage à chaud, comprenant une zone d'installation de laminoir, dans laquelle la zone d'installation de laminoir est muni de l'équipement de production de zone de laminoir avec grappins rotatifs selon l'une quelconque des revendications 1 à 11.

13. Chaîne de production de laminage à chaud selon la revendication 12, dans laquelle la zone d'installation de laminoir est une zone de laminoir à cage unique, et la zone de laminoir à cage unique est muni de l'équipement de production de zone de laminoir avec grappins rotatifs ; et/ou
dans laquelle la zone d'installation de laminage comprend une zone de laminage grossier et une zone de laminage de finition, une extrémité de sortie de la zone de laminage grossier est raccordée à une extrémité d'entrée de la zone de laminage de finition et l'équipement de production de zone de laminoir avec grappins rotatifs est disposé dans la zone de laminoir grossier et/ou la zone de laminoir de finition.
